# EUROPEAN PATENT APPLICATION

(11) **EP 4 572 061 A1**
(43) Date of publication of application: **18.06.2025**
(21) Application number: 24218501.5
(22) Date of filing: 09.12.2024
(51) Int. Cl.: H02J 3/00, B64D 41/00, G06N 3/02, H02J 3/14, H02J 4/00

(54) **SYSTEM AND METHOD FOR POWER MANAGEMENT IN AN AIRCRAFT**

(30) Priority: 12.12.2023 IN 202311084694
(71) Applicant: Hamilton Sundstrand Corporation, Charlotte, NC 28217-4578 (US)
(72) Inventor: SAHAY, Gaurav, 560105 Bangalore, KA (IN); JONNADULA, Vijay Kumar, 560032 Bangalore, Karnataka (IN); MELKERI, Rajshekher, 585330 Bidar, Karnataka (IN)
(74) Representative: Dehns

(57) **Abstract**

An aircraft power system (100) for power a plurality of loads of an aircraft includes a first secondary power distribution assembly (SPDA) network (102) configured to manage electrical power delivered to a first load (101) among the plurality of loads, and a second SPDA network (103) configured to manage electrical power delivered to a second load (108) among the plurality of loads. The aircraft power system further includes a synthetic load management system (SLMS) (150) in signal communication with the first SPDA and the second SPDA. The SLMS is configured to reference at least one operational condition of the aircraft and historical data corresponding to the first load and the second load. The SLMS is configured to predict load demands of the of the first load and the second load operating at different operating conditions based on the historical data.

## Description

### CROSS-REFERENCE TO RELATED APPLICATIONS

This application claims the benefit of Indian Application No. 202311084694 filed December 12, 2023.

### BACKGROUND

The following description relates generally to aircraft power systems, and more particularly, to a synthetic load management system configured to optimize load shedding during overload conditions.

In an aircraft power system, when some of the generators become unable to generate sufficient power due to failures, the power system cannot meet the load demand from the various onboard devices (e.g., loads), which may result in an overload condition. To maintain sufficient power during overload conditions, the aircraft power system can perform a load shedding operation, where the power supply to some devices (e.g., loads) are disconnected when the load's function (e.g., gally power, cabin lighting system, etc.) does not impact aircraft flight.

### BRIEF DESCRIPTION

According to a non-limiting embodiment, an aircraft power system for power a plurality of loads of an aircraft includes a first secondary power distribution assembly (SPDA) network configured to manage electrical power delivered to a first load among the plurality of loads, and a second SPDA network configured to manage electrical power delivered to a second load among the plurality of loads. The aircraft power system further includes a synthetic load management system (SLMS) in signal communication with the first SPDA and the second SPDA. The SLMS is configured to reference at least one operational condition of the aircraft and historical data corresponding to the first load and the second load. The SLMS is configured to predict load demands of the of the first load and the second load operating at different operating conditions based on the historical data.

In addition to one or more of the features described above, or as an alternative to any of the foregoing embodiments, based on the predicted load demands, one or both of the first SPDA is configured to manage the electrical power delivered to the first load and the second SPDA and to manage the electrical power delivered to the second load.

In addition to one or more of the features described above, or as an alternative to any of the foregoing embodiments, the SLMS comprises a processing unit configured to obtain the operating conditions and the historical data, and a machine learning model in signal communication with the processing unit to receive model input data including the operating conditions and the historical data. The machine learning model is configured to correlate the model input data to load demands of one or both of the first load and the second load.

In addition to one or more of the features described above, or as an alternative to any of the foregoing embodiments, the machine learning model includes a neural network having one or more internal layers of nodes configured to apply one or more weights to the model input data to correlate the model input data to the load demands.

In addition to one or more of the features described above, or as an alternative to any of the foregoing embodiments, the SLMS is configured to output a predicted load demand signal indicative of the predicted load demands of the at least one first load and the second load based on the correlation between the model input data and the load demands.

In addition to one or more of the features described above, or as an alternative to any of the foregoing embodiments, the SLMS is configured to output the predicted load demand signal in response to the processing unit detecting a load demand on the aircraft power system exceeds a threshold value.

In addition to one or more of the features described above, or as an alternative to any of the foregoing embodiments, the SLMS is configured to refrain from outputting the predicted load demand signal in response to one or both the processing unit detecting the load demand is less than or equal to the threshold value, or the SLMS is manually over-ridden by an operator of the aircraft to block output of the predicted load demands.

According to another non-limiting embodiment, an aircraft power system of an aircraft comprises a primary power distribution assembly (SPDA) configured to generate a first electrical power and to control delivery of the first electrical power to a load, and a secondary SPDA configured to generate a second electrical power and to control delivery of the second electrical power to the load. The aircraft power system further comprises a synthetic load management system (SLMS) in signal communication with the primary SPDA and the secondary SPDA. The SLMS is configured to reference at least one operational condition of the aircraft and historical data corresponding to the load utilized during previous fights of the aircraft. The SLMS is configured to predict load demands of the load operating at different operating conditions based on the historical data.

According to yet another non-limiting embodiment, a method of managing power supplied to aircraft loads during an overload condition is provided. The method comprises controlling delivery of first electrical power to a first load using a first secondary power distribution assembly (SPDA) network, and controlling delivery of second electrical power to a second load using a secondary SPDA network. The method further comprises referencing, by a synthetic load management system (SLMS), at least one operational condition of the aircraft and historical data corresponding to the first load and the second load, and predicting, by the SLMS, load demands of the of the first load and the second load operating at different operating conditions based on the historical data.

### BRIEF DESCRIPTION OF THE DRAWINGS

The following descriptions should not be considered limiting in any way. With reference to the accompanying drawings, like elements are numbered alike:
FIG. 1 is a block diagram of an aircraft power system according to a non-limiting embodiment of the present disclosure.
FIG. 2 is a flow diagram illustrating a method of managing power supplied to aircraft loads during an overload condition according to a non-limiting embodiment of the present disclosure.

### DETAILED DESCRIPTION

Turning now to a technical overview of the present teachings, an aircraft typically includes one or more generators for generating power on board from the engines installed. During flight, the power obtained from the generators is supplied to on-board devices (e.g., loads) through a power distribution network. When, however, a generator becomes unable to generate sufficient power due to a fault and/or an overload condition where the aircraft power system cannot deliver a sufficient amount of power to all the on-board devices (e.g., loads). To address such scenarios, the aircraft power system can perform a load shedding operation, to reduce load demand with the aim of removing the overload condition.

Current load shedding operations performed by conventional power management system rely on the maximum power consumption of each of the on-board devices (e.g., loads) to be able to determine which loads to shed. However, the maximum power consumption may not be the true power drawn/consumed by each of the on-board devices/loads. Rather, the on-board devices may consume less or even more power in case of a generator fault event and/or a fault with one or more of the loads. As a result, power to one or more targeted on-board devices/loads may be disconnected even though the targeted on-board device/load is not actually demanding its maximum-rate power and therefore could have instead remained connected to receive power.

One or more non-limiting embodiments of the present disclosure addresses the shortcomings of conventional aircraft power management systems by providing an aircraft power system that employes a synthetic load management system (SLMS) capable of determining the power demands of on-board devices (e.g., loads) based on real-time operating conditions and historical information pertaining to the on-board devices or loads. The SLMS can further determine whether a given on-board device or load should be shed. In this manner, an on-board device/load can retain power when their real-time load demand is not a detriment to the power system despite its maximum-rated operating power.

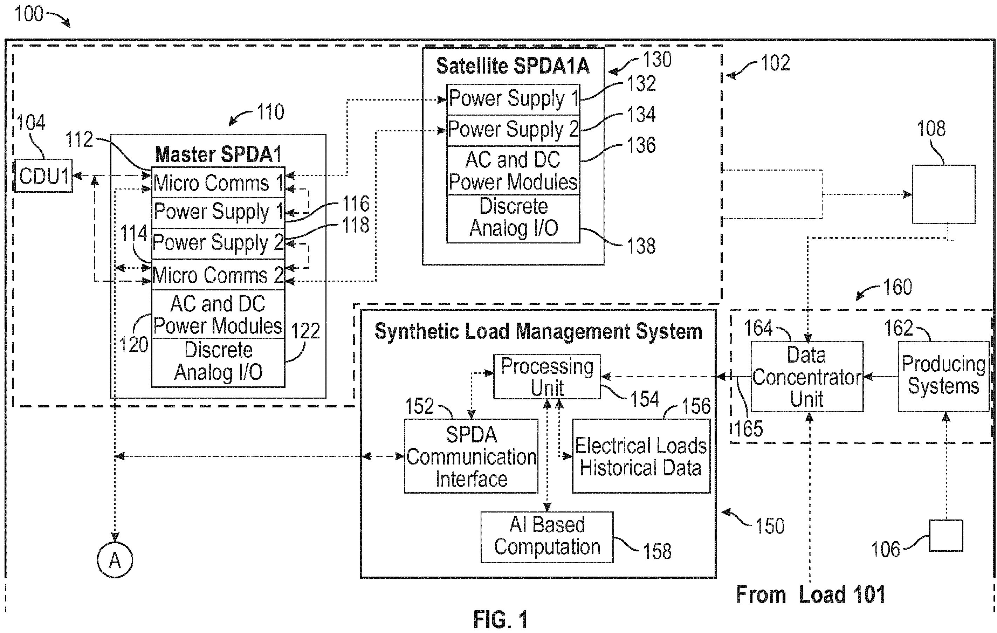

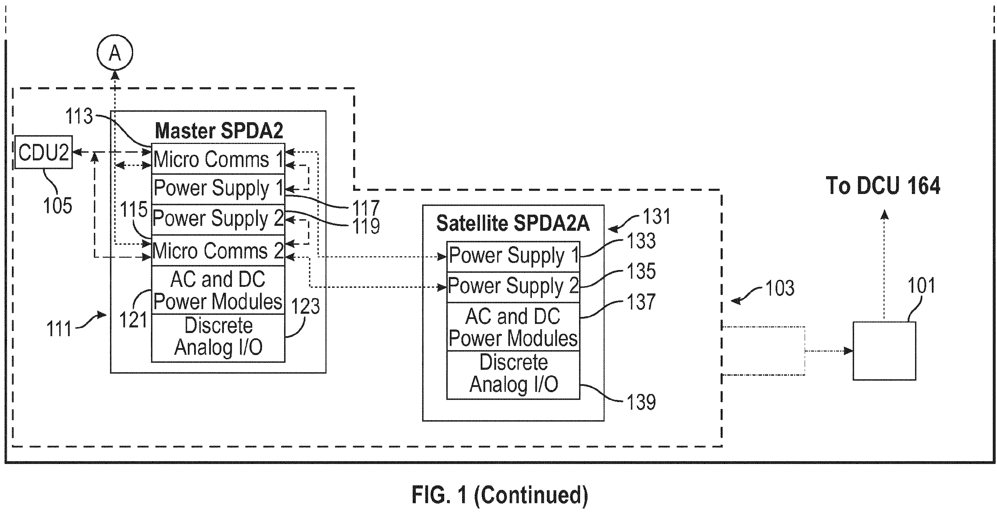

With reference now FIG. 1, an aircraft power system 100 is illustrated according to a non-limiting embodiment of the present disclosure. The aircraft power system 100 can include a first SPDA network 102, a second SPDA network 103, a data source 160, and a synthetic load management system (SLMS) 150.

Each of the first SPDA network 102 and the second SPDA network 103 is configured to manage and distribute power to at least one load 101/108 on-board the aircraft. The first SPDA network 102 can include a first primary SPDA 110 and a first satellite SPDA 130. The primary SPDA 110 can include a first micro communication module (micro comm) 112, a second micro comm 114, a first primary power supply 116 in signal communication with the first micro comm 112, a second primary power supply 118 in signal communication with the second micro comm 114, a primary AC/DC power module 120, and a primary input/output (I/O) module 122.

The first and second micro comms 112 and 114 are configured to control various devices in the primary SPDA 110 and the satellite SPDA 130. According to a non-limiting embodiment, the first and second micro comms 112 and 114 communicate with each other and the first and second power supplies 116 and 118, respectively, via a serial communication bus. In a non-limiting embodiment, the first primary power supply 116 can provide power to the first micro comm 112, the primary AC/DC power module 120, and the primary I/O module 122. The primary AC/DC power module 120 can include various power circuits that operate on the power provided by the first power supply 116 and/or the second power supply 118. The power circuits include, but are not limited to an AC-to-AC converter, and AC-to-DC converter, a DC-to-AC converter, a DC-to-DC converter, and an rectifier circuit. The second primary power supply 118 can also provide power to the second micro comm 114 the primary AC/DC power module 120, and the primary I/O module 122, and be utilized for power supply redundancy if necessary.

In one or more non-limiting embodiments, the first and second micro comms 112 and 114 are in signal communication with a first control display unit (CDU) 104. The first CDU 104 is configured to command the turn-on and turn-off of the DC and AC power (e.g., provided by the first and second power supplies 116 and 118) to one or more of the loads 101/108. Accordingly, the first CDU 104 can display the status of each power distribution circuit output from the AC/DC power module 120.

The first satellite SPDA 130 is employed to provide a more reliable, redundant, and efficient distribution of electrical power. According to a non-limiting embodiment, the first satellite SPDA 130 is controlled by the first primary SPDA 110. In at least one example, the first primary SPDA 110 employs the first and second micro comms 112 and 114, while the first satellite SPDA 130 excludes a micro comm. Accordingly, the first and second micro comms 112 and 114 microprocessors can be used to provide command signals to the first satellite SPDA 130 for controlling additional aircraft systems. This configuration allows the first satellite SPDA 130 to be incorporated into the aircraft, which facilitates installation and hence provides more flexibility.

The first primary micro comm 112 controls the first satellite power supply 132 and the second primary micro comm 114 controls the second satellite power supply 134. The first satellite power supply 132 and/or the second satellite power supply can provide power to the satellite AC/DC power module 136 and the satellite I/O module 138.

The first satellite SPDA 130 can include a first satellite power supply 132, a second satellite power supply 134, a satellite AC/DC power module 136, and a satellite I/O module 138. The first satellite power supply 132 is in signal communication with the first micro comm 112, and the second satellite power supply 134 is in signal communication with the second micro comm 114. In at least one non-limiting embodiment, the first satellite power supply 132 and second power supply 134 can provide power to the satellite AC/DC power module 136 and the satellite I/O module 138 independently.

The second SPDA network 103 can be employed to provide independent management and distribution of power to over one or more on-board devices/loads that are independent or different from those managed by the first SPDA network 101/108. Although two SPDA networks are shown, it should appreciated that additional SPDA networks for management of additional devices/loads can be employed without departing from the scope of the invention.

The second primary SPDA 111 can include a third micro communication module (micro comm) 113, a fourth micro comm 115, a third primary power supply 117 in signal communication with the third micro communication module (micro comm) 113, a fourth primary power supply 119 in signal communication with the fourth micro comm 115, a second primary AC/DC power module 121, and a second primary input/output (I/O) module 123. The second satellite SPDA 131 can include a third satellite power supply 133, a fourth satellite power supply 135, a second satellite AC/DC power module 137, and a second satellite I/O module 139. The third satellite power supply 133 is in signal communication with the third micro comm 113, and the fourth satellite power supply 135 is in signal communication with the fourth micro comm 115. The components and modules 113-123 of the second primary SPDA 111 operate in a similar manner to that of the first primary SPDA 110. Likewise, the components and modules 133-139 of the second satellite SPDA 131 operate in a similar manner to that of the first satellite SPDA 130. Therefore, details of their functions and operations will not be repeated for the sake of brevity.

The data source 160 is configured to deliver data from one or more producing systems 162. The producing systems 162 can also be in signal communication with one or more sensors 106, which provide aircraft operating parameters that are useable by the SLMS 150 to predict the load demands of one or more of the loads 101/108 during a given aircraft operating condition. The operating parameters can include, but are not limited to, outside air temperature, pressure, altitude, and airspeed, and generator output voltage/current.

The data source 160 also includes a data concentration unit (DCU) 164 configured to collect, process and format the aircraft systems data received from the producing systems 162 into a common digital output that can be transmitted to the first SPDA network 102, the second SPDA network 103, and/or or other aircraft systems according to a defined communications protocol 165. The data obtained by the DCU 164 can include real time operating conditions, e.g., obtained from one or more aircraft sensors and/or computed by on-board computers. The DCU 164 can also be connected to the loads 101 and 108 to obtain real-time load demands. In one or more embodiments, the DCU 164 can convert the aircraft systems data, the real-time load demands, and/or signals output from one or more of the sensors 106 into a protocol 165 that can be transmitted across one or more of the communication buses and/or communication interfaces included in the aircraft power system 100.

The synthetic load management system (SLMS) 150 is configured to determine a load demand of at least one load, and to control the first SPDA network 102 and/or the second SPDA network 103 to distribute the power based on the load demand. The SLMS 150 can include a SPDA communication interface 152, a SLMS processing unit 154, an electrical load historical data storage unit 156, and an artificial intelligence (AI) module 158.

The SPDA communication interface 152 establishes signal communication between the SLMS 150, the first SPDA network 102, and the second SPDA network 103. In one or more non-limiting embodiments, the SPDA communication interface 152 formats the data before sending it to the first and second primary SPDAs 110 and 111

The SLMS processing unit 154, can include a hardware processor, which receives the data from the data source 160 and can exchange data with the first and second SPDA networks 102 and 103 via the SPDA communication interface 152. The SLMS processing unit 154 can further utilize the data obtained from the data source 160 to reference and/or determine historical data such as, for example, electrical load requirements or load demands under different operating conditions, load demand trends, etc., and store the historical data in the electrical load historical data storage unit 156.

The AI module 158 can be implemented as a machine learning model including one or more neural networks that can be trained and then used to predict load demands for the on-board devices/loads based on real-time operating conditions of the aircraft. The neural networks can include having one or more internal layer of nodes (e.g., a hidden layer of neurons) that apply one or more weights, biases to the plurality of inputs received from DCU 164 to correlate them to load demands of the loads 101/108 controlled by the first SPDA network 102 and/or second SPDA network 103, respectively.

The AI module 158 can also be pre-trained based on previously obtained data (e.g., flight test data, electrical load historical data, load demand trends, surrounding operating conditions, etc.) to correlate the inputs (e.g., received from the DCU 164 to load demands of the loads 101/108. For example, various aircraft devices or loads can be operated at controlled operating conditions off-line (e.g., during a testing environment) to determine the load demands of a given load 101/108 during a given operating condition. In this manner, the AI module 158 can be trained to learn the load demands of a given device/load 101/108 at a given operating condition, and/or be trained to learn different load demands of one or more loads 101/108 based on different operational parameters/previous flight leg data (e.g., obtained from the DCU 164). Once trained, the AI module 158 can predict the load demand of a similar device/load 101/108 operating in real-time on-board the aircraft.

The trained AI module 158 can also perform trend analysis for electrical loads utilization data by comparing the load demands generated by the AI module 158 with the electrical loads historical data (e.g., obtained from the load historical data storage unit 156), and predict failures in one or more of the loads 101/108 based on the trend analysis. In one or more non-limiting embodiments, the prediction of a failure of a given load 101/108 can be displayed onto the CDUs 104 and 105, which allows the flight crew to take countermeasures in advance rather than taking actions after one or more of the loads 101/108 actually fail.

The SLMS processing unit 154 determines the real-time load demands of the loads 101/108 on-board the aircraft. According to a non-limiting embodiment, the SLMS processing unit 154 can determine an overload condition when a generator output falls below a target threshold or a generator failure has been detected. When such an overload condition is detected, the SLMS processing unit 154 can output one or more load demand request signals indicative of the actual or real-time load demand of a respective on-board device/load 101/108 to the first SPDA network 102 and/or to the second SPDA network 103. In this manner, the first SPDA network 102 and/or the second SPDA network 103 can make a more informed decision as to which on-board devices or loads 101/108 to shed based on their actual real-time load demand rather than arbitrarily shedding loads 101/108 based on the maximum power rating. In a non-limiting embodiment, when a fault (e.g., a generator failure, an overload condition, etc.) is detected (e.g., a generator fault and/or a load fault) the SLMS can be manually overridden.

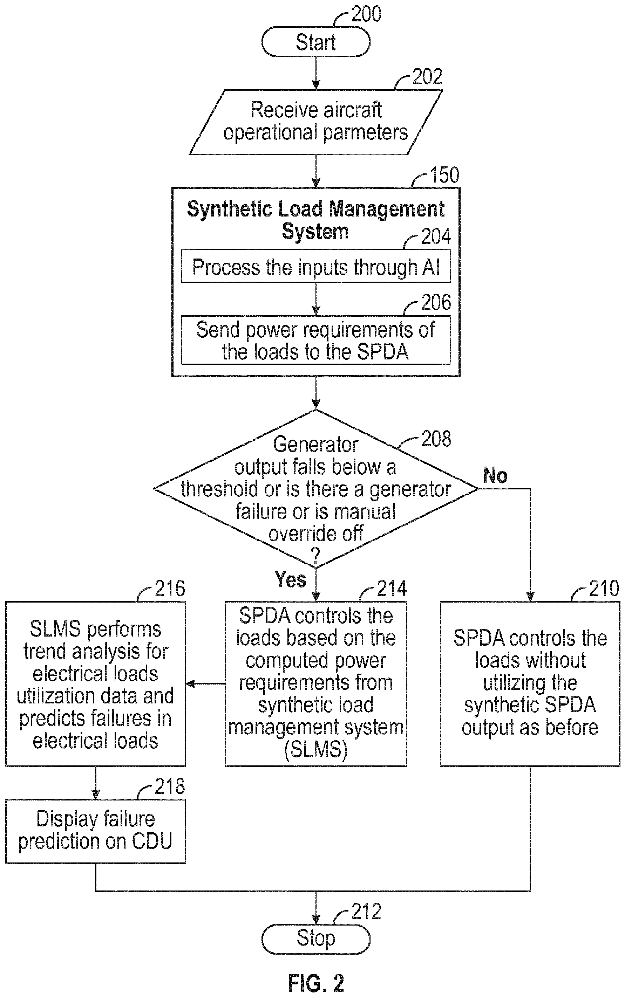

Turning now to FIG. 2, the method begins at operation 200 and real-time operating parameters (outside air temperature, pressure, altitude, and airspeed, and generator output voltage/current) are received by the SLMS 150 at operation 202. At operation 204, the SLMS 150 computes real-time load demands of aircraft loads 101/108 and real-time operating parameters (outside air temperature, pressure, altitude, and airspeed, and generator output voltage/current), and at operation 206 the SLMS 150 sends the real-time load demands to one or more of the primary SPDAs 110 and/or 111 configured to control power delivery to one or more of their respective loads 101/108.

At operation 208, a determination is made as to whether one or more SLMS control condition exists. The SLMS control conditions include whether: (a) an output of one or more generators falls below an output threshold; or (b) a failure of one or more generators is detected; or (c) a SLMS manual override is deactivated (e.g., "OFF"). When none of the SLMS control conditions exist, the SPDAs 110/111 control the loads 101/108 without utilizing the real-time loads demands computed by the SLMS 150 at operation 210, and the method ends at operation 212.

When, however, a SLMS 150 control condition exists at operation 208, the method proceeds to operation 214. Accordingly, the SPDAs 110/111 control the loads 101/108 based on the computed requirements/load demands provided by the SLMS 150. At operation 216, the SLMS 150 can further perform a trend analysis for electrical loads utilization data and predict failures in the loads 101/108. The prediction of failures in the loads 101/108 can enable the flight crew to take countermeasures in advance rather than taking actions after they actually fail. According to a non-limiting embodiment, the trend analysis can also be used to predict the load demands of the loads 101/108 under different operating conditions using flight legs of historical data. In this manner, the predicted load demands can be utilized to avoid load shed conditions in advance and pre-emptively reduce the load on the generators. At operation 218, failure predictions based on the trend analysis can be displayed on a CDU 104/105 before the method ends at operation 212.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An aircraft power system (100) for power a plurality of loads of an aircraft, the aircraft power system comprising:
a first secondary power distribution assembly, SPDA, network (102) configured to manage electrical power delivered to a first load (101) among the plurality of loads;
a second SPDA network (103) configured to manage electrical power delivered to a second load (108) among the plurality of loads; and
a synthetic load management system, SLMS, (150) in signal communication with the first SPDA and the second SPDA, the SLMS configured to reference at least one operational condition of the aircraft and historical data corresponding to the first load and the second load,
wherein the SLMS is configured to predict load demands of the of the first load and the second load operating at different operating conditions based on the historical data.

2. The aircraft power system of claim 1, wherein based on the predicted load demands, one or both of the first SPDA (102) is configured to manage the electrical power delivered to the first load (101) and the second SPDA (103) and to manage the electrical power delivered to the second load (108).

3. The aircraft power system of claim 2, wherein the SLMS (150) comprises:
a processing unit (154) configured to obtain the operating conditions and the historical data; and
a machine learning model (158) in signal communication with the processing unit to receive model input data including the operating conditions and the historical data, the machine learning model configured to correlate the model input data to load demands of one or both of the first load (101) and the second load (108); and optionally wherein the machine learning model includes a neural network having one or more internal layers of nodes configured to apply one or more weights to the model input data to correlate the model input data to the load demands.

4. The aircraft power system of claim 3, wherein the SLMS (150) is configured to output a predicted load demand signal indicative of the predicted load demands of the at least one first load (101) and the second load (108) based on the correlation between the model input data and the load demands, and optionally:
wherein the SLMS is configured to output the predicted load demand signal in response to the processing unit detecting a load demand on the aircraft power system exceeds a threshold value and optionally wherein the SLMS is configured to refrain from outputting the predicted load demand signal in response to one or both the processing unit detecting the load demand is less than or equal to the threshold value, or the SLMS is manually over-ridden by an operator of the aircraft to block output of the predicted load demands.

5. An aircraft power system (100) of an aircraft, the aircraft power system comprising:
a primary power distribution assembly, SPDA, (102) configured to generate a first electrical power and to control delivery of the first electrical power to a load;
a secondary SPDA (103) configured to generate a second electrical power and to control delivery of the second electrical power to the load;
a synthetic load management system, SLMS, (150) in signal communication with the primary SPDA and the secondary SPDA, the SLMS configured to reference at least one operational condition of the aircraft and historical data corresponding to the load utilized during previous fights of the aircraft,
wherein the SLMS is configured to predict load demands of the load operating at different operating conditions based on the historical data.

6. The aircraft power system of claim 5, wherein based on the predicted load demands, one or both of the primary SPDA (102) and the secondary SPDA (103) is configured to control the delivery of the second electrical power to the load.

7. The aircraft power system of claim 6, wherein the SLMS comprises:
a processing unit (154) configured to obtain the operating conditions and the historical data; and
a machine learning model (158) in signal communication with the processing unit to receive model input data including the operating conditions and the historical data, the machine learning model configured to correlate the model input data to load demands of the load; and optionally wherein the machine learning model includes a neural network having one or more internal layers of nodes configured to apply one or more weights to the model input data to correlate the model input data to the load demands.

8. The aircraft power system of claim 7, wherein the SLMS (150) is configured to output a predicted load demand signal indicative of the predicted load demands of the load based on the correlation between the model input data and the load demands.

9. The aircraft power system of claim 8, wherein the SLMS (150) is configured to output the predicted load demands in response to the processing unit (154) detecting a load demand on the aircraft power system exceeds a threshold value.

10. The aircraft power system of claim 9, wherein the SLMS (150) is configured to refrain from outputting the predicted load demand signal in response to one or both the processing unit detecting the load demand is less than or equal to the threshold value, or the SLMS is manually over-ridden by an operator of the aircraft to block output of the predicted load demands.

11. A method of managing electrical power of an aircraft, the method comprising:
controlling delivery of first electrical power to a first load using a first secondary power distribution assembly, SPDA, network;
controlling delivery of second electrical power to a second load using a secondary SPDA network;
referencing, by a synthetic load management system, SLMS, at least one operational condition of the aircraft and historical data corresponding to the first load and the second load; and
predicting, by the SLMS, load demands of the of the first load and the second load operating at different operating conditions based on the historical data.

12. The method of claim 11, further comprising:
the first SPDA manages the electrical power delivered to the first load based on the predicted load demands; and
the second SPDA manages the electrical power delivered to the second load based on the predicted load demands.

13. The method of claim 12, further comprising:
obtaining, by a processing unit included in the SLMS, the operating conditions and the historical data; and
delivering the operating conditions and the historical data to a machine learning model included in the SLMS;
inputting the operating conditions and the historical data as model input data into the machine learning model; and
correlating, by the machine learning model, the model input data to load demands of one or both of the first load and the second load; and optionally wherein the method further comprises applying, by one or more internal layers of nodes included in a neural network of the machine learning model, one or more weights to the model input data to correlate the model input data to the load demands.

14. The method of claim 13, further comprising outputting from the SLMS a predicted load demand signal indicative of the predicted load demands of the at least one first load and the second load based on the correlation between the model input data and the load demands.

15. The method of claim 14, further comprising:
refraining outputting of the predicted load demand signal from the SLMS when a load demand on the aircraft being less than or equal to a threshold value;
outputting the load demand signal from the SLMS in response to the load demand exceeding the threshold value; and
refraining outputting of the load demand signal from the SLMS in response to manually over-riding the SLMS.
